# EUROPÄISCHE PATENTSCHRIFT

(11) **EP 1 661 940 B1**
(45) Veröffentlichungstag und Bekanntmachung des Hinweises auf die Patenterteilung: **04.05.2011**
(21) Anmeldenummer: 05022980.6
(22) Anmeldetag: 21.10.2005
(51) Int. Cl.: C08J 9/00, C08J 9/12

(54) **Schaumstoffplatten mit verminderter Wärmeleitfähigkeit**
Foam slabs having low thermal conductivity
Plaques en mousse à faible conductivité thermique

(30) Priorität: 29.11.2004 DE 102004057589
(43) Veröffentlichungstag der Anmeldung: 31.05.2006
(73) Patentinhaber: BASF SE, 67056 Ludwigshafen (DE)
(72) Erfinder: Hahn, Klaus, Dr., 67281 Kirchheim (DE); Ruch, Joachim, Dr., 67157 Wachenheim (DE); Ehrmann, Gerd, Dr., 67146 Deidesheim (DE); Turznik, Gerhard, Dr., 67269 Grünstadt (DE)

(56) Entgegenhaltungen:
- EP-A- 0 802 220
- EP-A- 0 863 175
- WO-A-02/081555
- WO-A-03/106544

## Beschreibung

Die Erfindung betrifft Extrusions-Schaumstoffplatten auf Basis von Styrolpolymerisaten mit einer Dichte im Bereich von 20 bis 200 kg/m³ und verminderter Wärmeleitfähigkeit sowie Verfahren zur Herstellung.

Extrudierte Polystyrol-Schaumstoffe (XPS) werden in großem Maß zum Isolieren von Gebäuden und Gebäudeteilen eingesetzt. Für diesen Anwendungszweck müssen die Schaumstoffplatten eine möglichst niedrige Wärmeleitfähigkeit aufweisen. Neuerdings werden aus Umweltschutzgründen zur Herstellung von XPS-Platten halogenfreie Treibmittel, vorzugsweise CO₂-haltige Treibmittelgemische eingesetzt. CO₂ diffundiert aber wesentlich rascher als fluorhaltige Gase aus den Schaumstoffzellen heraus und wird durch Luft ersetzt. Aus diesem Grund ist die Wärmeleitfähigkeit von XPS-Platten, die mit CO₂-haltigen Treibmitteln hergestellt wurden, etwas höher als die von XPS-Platten, die mit Fluorkohlenwasserstoffen hergestellt wurden. Aus EP-A 863 175, EP-A 1 031 600, WO 02/081555 und WO 01/04191 ist bekannt, dass durch Zusatz von Graphitpartikeln bei der XPS-Herstellung die Wärmeleitfähigkeit reduziert werden kann.

Die EP-A 0 802 220 beschreibt unter Verwendung halogenfreier Treibmittel hergestellte, gleichmäßige, geschlossenzellige und formstabile extrudierte Polystyrolschaumstoffkörper aus einer Polystyrol-Thermoplastmatrix mit einem mittleren Molekulargewicht M_{w} zwischen 175 000 und 500 000 g/mol Und einer Uneinheitlichkeit M_{w}/Mₙ von größer als 1,5.

Für einige Anwendungen ist jedoch die Oberflächenqualität und Druckfestigkeit der Schaumstoffplatten, insbesondere bei niedrigen Dichten, nicht ausreichend.

Aufgabe der vorliegenden Erfindung war es daher, Extrusions-Schaumstoffplatten auf Basis von Styrolpolymerisaten zu finden, die neben einer geringem Wärmeleitfähigkeit eine gute Oberflächenqualität und eine hohe Druckfestigkeit, insbesondere bei niedrigen Dichten, aufweisen.

Demgemäss wurden Extrusions-Schaumstoffplatten auf Basis von Styrolpolymerisaten mit einer Dichte im Bereich von 20 bis 200 kg/m³, gefunden, die 0,1 bis 10 Gew.-% Graphit enthalten und bei denen das Styrolpolymerisat ein mittleres Molekulargewicht M_{w} im Bereich von 160.000 bis 400.000 g/mol und eine Uneinheitlichkeit M_{w}/Mₙ von mindestens 2.0 aufweist.

Überraschenderweise zeigte sich, dass das Molekulargewicht und die Molekulargewichtsverteilung des verwendeten Styrolpolymerisates einen entscheidenden Einfluss auf die Oberflächenqualität, die Schaumstruktur, die Dichte, die Offenzelligkeit und die mechanischen Eigenschaften der graphithaltigen Schaumstoffplatten hat. Bei Einsatz von Polystyrolen mit einem mittleren Molekulargewicht M_{w} unter 160.000 g/mol werden schlechte Schaumstoffoberflächen, und hohe Offenzelligkeiten erhalten. Bei Molekulargewichten über 400.000 und/oder Uneinheitlichkeiten <2,0 sind die erreichbaren Schaumstoffdichten zu hoch.

Bevorzugt liegt das mittleren Molekulargewicht M_{w} des Strolpolymerisates in der Schaumstoffplatte (bestimmt mittels Gelpermeationschromatographie GPC) im Bereich von 180.000 bis 350.000 g/mol und die Uneinheitlichkeit im Bereich von 2.0 bis 3.0. Bei starkem Molekulargewichtsabbau bei der Extrusion, müssen gegebenenfalls etwas höhermolekulare Styrolpolymerisate eingesetzt werden.

Die erfindungsgemäßen XPS-Schaumstoffplatten weisen in der Regel eine Druckfestigkeit, gemessen nach DIN EN 826, im Bereich von 0,2 bis 1,0 N/mm², bevorzugt im Bereich von 0,3 bis 0,7 N/mm² auf. Bevorzugt liegt die Dichte der Schaumstoffplatten im Bereich von 25 bis 50 kg/m³ und die Dicke im Bereich von 20 bis 200 mm. Der Querschnitt beträgt in der Regel mindestens 50 cm², bevorzugt 100 bis 2000 cm².

Die erfindungsgemäßen Extrusions-Schaumstoffplatten weisen bevorzugt Zellen auf, die gemessen nach DIN ISO 4590 zu mindestens 90%, insbesondere zu 95 bis 100% geschlossenzellig sind.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Die erfindungsgemäßen Extrusions-Schaumstoffplatten können durch Extrusion einer treibmittelhaltigen Styrolpolymerisat-Schmelze durch eine Düse in einen Bereich niedrigeren Drucks erhalten werden. Hierbei wird ein Styrolpolymerisat mit einem mittleren Molekulargewicht M_{w} im Bereich von 160.000 bis 400.000 g/mol und eine Uneinheitlichkeit M_{w}/Mₙ von mindestens 2.0 aufgeschmolzen und in einem Extruder mit 0,1 bis 10 Gew.-%, bezogen auf Styrolpolymerisat, Graphit mit einem mittleren Teilchendurchmesser im Bereich von 0,01 bis 100 µm zugegeben und ein Treibmittel zudosiert und eingemischt.

Als Treibmittel können die üblichen flüchtigen organischen Verbindungen wie Fluorchlorkohlenwasserstoffe, Fluorkohlenwasserstoffe, Kohlenwasserstoffe, Alkohole, Ketone und Ether verwendet werden. Bevorzugt sind jedoch halogenfreie Treibmittel und Treibmittelgemische, z.B. anorganische Gase wie Kohlendioxid, Stickstoff, Argon und Ammoniak, gegebenenfalls im Gemisch mit Alkoholen, Kohlenwasserstoffen, Ketonen und Ethern verwendet.

Die Treibmittel werden in der Regel in Mengen von 3 bis 15, vorzugsweise 4 bis 12 Gew.-%, bezogen auf das Styrolpolymerisat eingesetzt. Bevorzugt wird ein Treibmittelgemisch aus 95 bis 20 Gew.-% CO₂, 5 bis 80 Gew.-% H₂O und 0 bis 75 Gew.-% eines Alkohols, Ketons oder Ethers eingesetzt.

Bevorzugt wir die Extrusion in Gegenwart von 0,01 bis 10 Gew.-%, bezogen auf das Styrolpolymerisat, eines partikelförmigen IR-Absorbern durchgeführt. Geeignete IR-Absorber sind Ruß, Metallpulver, z. B. Aluminiumpulver und Titandioxid; bevorzugt ist Graphit mit einer Partikelgröße von 1 bis 100 µm, in Mengen von 0,02 bis 4 Gew.-%.

Auf diese Weise sind Extrusions-Schaumstoffplatten erhältlich, die eine Wärmeleitfähigkeit von 0,040 W/mK oder darunter, bevorzugt unter 0,035 W/mK, gemessen bei 10°C nach DIN EN 13164 und DIN EN 12667 aufweisen.

Zweckmäßigerweise werden bei dem erfindungsgemäßen Verfahren Flammschutzmittel zugesetzt, vorzugsweise 0,5 bis 5 Gew.-% organische Bromverbindungen mit einem Bromgehalt von mehr als 70 %, wie z.B. Hexabromcyclododecan, vorzugsweise zusammen mit 0,1 bis 0,5 Gew.-% einer C-C- oder O-O-labilen organischen Verbindung, wie Dicumylperoxid oder bevorzugt Dicumyl.

Als weitere übliche Zusatz- und/oder Hilfsstoffe können der Polystyrolmatrix Antistatika, Stabilisatoren, Farbstoffe, Füllstoffe und/oder Keimbildner in üblichen Mengen zugesetzt werden.

Mit dem erfindungsgemäßen Verfahren lassen sich Schaumstoffplatten mit einer Dichte von 20 bis 200 kg/m³, insbesondere von 25 bis 50 kg/m³ herstellen, die eine Wärmeleitfähigkeit (λ-Wert) bei 10°C nach DIN EN 13164 und DIN EN 12667 von 0,040 W/mK oder darunter und gleichzeitig eine gute Oberflächengüte aufweisen.

### Beispiele:

Polystyrol 158 K (BASF AG) wurde zusammen mit den in der Tabelle angegebenen Mengen (Gew.-% bezogen auf Polystyrol) Graphit (UF 2 96/97 der Fa. Kropfmühl), sowie 1,5% Hexabromcyclododecan (Flammschutzmittel) und 0,2% Dicumyl (Flammschutzsynergist) einem Extruder mit einem inneren Schneckendurchmesser von 53 mm kontinuierlich zugeführt und aufgeschmolzen.

Durch eine in dem Extruder angebrachte Einlassöffnung wurde ein Treibmittelgemisch aus 3,5 % CO₂ und 3,5% Ethanol, jeweils bezogen auf Polystyrol, kontinuierlich in den Extruder eingedrückt und in die Schmelze eingemischt. Das im Extruder gleichmäßig geknetete Schmelze-Treibmittelgemisch wurde sodann einem zweiten Extruder mit einem Schneckendurchmesser von 90 mm zugeführt und dort während einer Verweilzeit von ca. 10 min auf die zum Schäumen notwendige Temperatur abgekühlt. Die gekühlte Schmelze wurde anschließend durch eine Schlitzdüse mit 50 mm Breite in die Atmosphäre extrudiert. Der dabei entstehende Schaum wurde durch ein Werkzeug zu Platten mit 30 mm Dicke und 100 mm Breite geformt. Von den nach 7 Tagen bei Raumtemperatur gelagerten Schaumstoffplatten wurden die in Tabelle angebebene Dichte nach DIN EN 1602 und die Geschlossenzelligkeit nach DIN-ISO 4590 bestimmt und die Oberflächengüte in einer Skala von Note 1 (sehr gut) bis 6 (ungenügend) bewertet.

Die erfindungsgemäßen Beispiele 1 - 3 zeigen eine gute Oberflächengüte und hohe Geschlossenzelligkeit bei geringen Dichten.

Die graphithaltigen Schaumstoffe zeigen für die eingesetzten Polystyrole eine deutlich bessere Oberflächengüte als die entsprechenden Schaumstoffe ohne Graphitzusatz (V1).

**Tabelle 1:**

| Beispiel | Graphit [Gew.-%] | Polystyrol M_{w} [g/mol] | Polystyrol M_{w}/Mₙ [nm] | Oberflächengüte [Note] | Dichte [kg/m³] | Geschlossenzelligkeit [%] |
|---|---|---|---|---|---|---|
| 1 | 0,5 | 310.000 | 2,05 | 1,5 | 34,5 | 98 |
| 2 | 0,5 | 230.000 | 2,37 | 1,0 | 32,3 | 96 |
| 3 | 5 | 190.000 | 2,39 | 2,0 | 33,4 | 97 |
| V1 | 0 | 310.000 | 2,05 | 3,0 | 33,2 | 96 |
| | | | | 5,0 | | |
| V2 | 5 | 150.000 | 2,21 | geschrumpft | 41,9 | 57 |
| V3 | 1,0 | 260.000 | 1,13 | 3,0 | 43,1 | 94 |
| V4 | 1,0 | 420.000 | 2,10 | 3,5 | 47,3 | 95 |

## Patentansprüche

1. Extrusions-Schaumstoffplatten auf Basis von Styrolpolymerisaten mit einer Dichte im Bereich von 20 bis 200 kg/m³, **dadurch gekennzeichnet, dass** sie 0,1 bis 10 Gew.-% Graphit enthalten und das Styrolpolymerisat ein mittleres Molekulargewicht M_{w} im Bereich von 160.000 bis 400.000 g/mol und eine Uneinheitlichkeit M_{w}/Mₙ von mindestens 2.0 aufweist.

2. Extrusions-Schaumstoffplatten nach Anspruch 1, **dadurch gekennzeichnet, dass** sie eine Wärmeleitfähigkeit, gemessen bei 10°C nach DIN EN 13164 und DIN EN 12667, von 0,040 W/mK oder darunter aufweisen.

3. Extrusions-Schaumstoffplatten nach einem der Ansprüche 1 oder 2, **dadurch gekennzeichnet, dass** die Zellen, gemessen nach DIN ISO 4590, zu mindestens 90% geschlossenzellig sind.

4. Verfahren zur Herstellung von Extrusions-Schaumstoffplatten durch Extrusion einer treibmittelhaltigen Styrolpolymerisat-Schmelze durch eine Düse in einen Bereich niedrigeren Drucks, **dadurch gekennzeichnet, dass** ein Styrolpolymerisat mit einem mittleren Molekulargewicht M_{w} im Bereich von 160.000 bis 400.000 g/mol und eine Uneinheitlichkeit M_{w}/Mₙ von mindestens 2.0 aufgeschmolzen und in einem Extruder mit 0,1 bis 10 Gew.-%, bezogen auf Styrolpolymer, Graphit mit einem mittleren Teilchendurchmesser im Bereich von 0,01 bis 100 µm vermischt wird.

5. Verfahren nach Anspruch 4, **dadurch gekennzeichnet, dass** das Treibmittel CO₂ umfasst.

## Claims

1. An extruded foam sheet based on styrene polymers with density in the range from 20 to 200 kg/m³, which comprises from 0.1 to 10% by weight of graphite, wherein the styrene polymer has average molar mass M_{w} in the range from 160 000 to 400 000 g/mol and polydispersity M_{w/}Mₙ of at least 2.0.

2. The extruded foam sheet according to claim 1, whose thermal conductivity, measured at 10°C to DIN EN 13164 and DIN EN 12667, is 0.040 W/mK or less.

3. The extruded foam sheet according to claim 1 or 2, wherein at least 90% of the cells, measured to DIN ISO 4590, are of closed-cell type.

4. A process for production of extruded foam sheets via extrusion of a styrene polymer melt comprising blowing agent through a die into a relatively low-pressure region, which comprises melting a styrene polymer with average molar mass M_{w} in the range from 160 000 to 400 000 g/mol and polydispersity M_{w}/Mₙ of at least 2.0, and mixing it, in an extruder, with from 0.1 to 10% by weight, based on styrene polymer, of graphite with average particle diameter in the range from 0.01 to 100 µm.

5. The process according to claim 4, wherein the blowing agent comprises CO₂.

## Revendications

1. Plaques de mousse produites par extrusion, à base de polymérisats de styrène ayant une densité dans la plage de 20 à 200 kg/m³, **caractérisées en ce qu'**elles contiennent de 0,1 à 10 % en poids de graphite et le polymérisat de styrène présente une masse moléculaire moyenne M_{w} dans la plage de 160 000 à 400 000 g/mole et une hétérogénéité M_{w}/Mₙ d'au moins 2,0.

2. Plaques de mousse produites par extrusion, selon la revendication 1, **caractérisées en ce qu'**elles présentent une conductivité thermique, mesurée à 10 °C selon DIN EN 13164 et DIN EN 12667, de 0,040 W/mK ou moins.

3. Plaques de mousse produites par extrusion, selon l'une quelconque des revendications 1 ou 2, **caractérisées en ce que** les cellules, mesurées selon DIN ISO 4590, sont à raison d'au moins 90 % de type cellule fermée.

4. Procédé pour la production de plaques de mousses produites par extrusion, par extrusion d'une mase fondue de polymérisat de styrène contenant un agent d'expansion, à travers une filière dans une zone de basse pression, **caractérisé en ce qu'**on fait fondre un polymérisat de styrène ayant une masse moléculaire moyenne M_{w} dans la plage de 160 000 à 400 000 g/mole et une hétérogénéité M_{w}/Mₙ d'au moins 2 et on le mélange dans une extrudeuse avec 0,1 à 10 % en poids, par rapport au polymère de styrène, de graphite ayant un diamètre moyen de particule dans la plage de 0,01 à 100 µm.

5. Procédé selon la revendication 4, **caractérisé en ce que** l'agent d'expansion comprend du CO₂.
